# EUROPÄISCHE PATENTANMELDUNG

(11) **EP 4 782 716 A1**
(43) Veröffentlichungstag der Anmeldung: **29.07.2026**
(21) Anmeldenummer: 25209464.4
(22) Anmeldetag: 17.10.2025
(51) Int. Cl.: F16F 1/38, F16F 1/387, F16F 1/393

(54) **BUCHSENLAGER MIT OPTIMIERTEN ZWISCHENBLECHEN**

(30) Priorität: 23.01.2025 DE 102025102500
(71) Anmelder: Vibracoustic SE, 69469 Weinheim (DE)
(72) Erfinder: Rose, David, Hamburg (DE); Frieß, Jakob, Hamburg (DE); Steinhardt, Ralf, Schwerin (DE)
(74) Vertreter: Patentanwälte Olbricht Buchhold Keulertz

(57) **Zusammenfassung**

Die Erfindung betrifft ein elastomeres Buchsenlager (50), umfassend einen metallischen Kern (30), der sich axial entlang einer Zentrallängsachse (L) erstreckt, eine konzentrisch zu dem Kern (30) angeordnete Außenhülse (10), einen zwischen dem Kern (30) und der Außenhülse (10) angeordneten und mit ihnen durch Vulkanisation verbundenen elastomeren Lagerkörper (20), wobei in dem Lagerkörper (20) zwei sich in axialer Richtung (A) über die gesamte Länge des Lagerkörpers (20) erstreckende und in einer ersten Radialrichtung (R1) gegenüberliegende Längsausnehmungen (40) ausgebildet sind, zwei Zwischenbleche (25), die in den Lagerkörper (20) einvulkanisiert sind und jeweils mindestens einen kreisförmigen Abschnitt (23) umfassen, der sich um einen Teilkreismittelpunkt (M) kreisförmig in einer Schnittebene senkrecht zu der Zentrallängsachse (L) über mindestens 135° in Umfangsrichtung (U) erstreckt, wobei der Lagerkörper (20) für jedes Zwischenblech (25) jeweils eine äußere Elastomerspur (21) und eine innere Elastomerspur (22) umfasst, wobei die Zwischenbleche (25) jeweils zwei in Relation zu den kreisförmigen Abschnitten (23) angewinkelte Abschnitte (24) aufweisen. Erfindungsgemäß ist vorgesehen, dass die angewinkelten Abschnitte (24) der Zwischenbleche (25) in Richtung einer zu der ersten Radialrichtung (R1) senkrechten zweiten Radialrichtung (R2) angewinkelt sind und sich senkrecht oder nahezu senkrecht in die Längsausnehmungen (40) des Lagerkörpers (20) hineinerstrecken.

## Beschreibung

Die Erfindung betrifft ein elastomeres Buchsenlager gemäß dem Oberbegriff von Anspruch 1.

Elastomere Buchsenlager sind im Stand der Technik bekannt. CN103241086A betrifft beispielsweise ein beidseitig geschlitztes elastomeres Buchsenlager mit zwei teilkreisförmigen Zwischenblechen. Ein Hauptproblem dieser Konstruktion ist die starke Dehnungskonzentration im zentralen Spaltbereich des elastomeren Lagerkörpers, insbesondere bei radialer Belastung senkrecht zum Spalt. Die Dehnungsüberhöhung führt zu einer übermäßigen Beanspruchung des Elastomers und in der Folge zu einem vorzeitigen Bauteilversagen.

Weiter betrifft JP4832344B2 ebenfalls ein elastomeres Buchsenlager mit teilkreisförmigen Zwischenblechen, jedoch mit einem bauchigen Kern und Zwischenblech. Trotz hoher Radial- und Axialsteifigkeit weist diese Lösung aufgrund der bauchigen Erweiterungen eine zusätzliche Belastung des Elastomers im Zentralbereich auf, wodurch ebenfalls eine Dehnungserhöhung und mögliche Schäden entstehen.

In CN112555315A wird ferner eine Buchsenkonfiguration mit nur teilumfänglichen Zwischenblechen beschrieben. Die Steifigkeit variiert erheblich zwischen den radialen Richtungen, da die Elastomerspuren ungleich verteilt sind. Die außen angewinkelten Enden der Zwischenbleche verstärken zwar die Steifigkeit in einer Richtung, verschlechtern jedoch die Steifigkeit in der orthogonalen Richtung und führen zu ungleichmäßiger Belastungsverteilung, was ebenfalls zu einem vorzeitigen Versagen führen kann.

Ziel der Erfindung ist es, diese und weitere Nachteile des Standes der Technik zu überwinden und ein verbessertes elastomeres Buchsenlager bereitzustellen, das hohe Radialsteifigkeiten bietet und gleichzeitig eine verbesserte Funktionalität sowie eine höhere Lebensdauer aufweist.

Hauptmerkmale der Erfindung sind im kennzeichnenden Teil von Anspruch 1 angegeben. Ausgestaltungen sind Gegenstand der Ansprüche 2 bis 15.

Bei einem elastomeren Buchsenlager, umfassend einen metallischen Kern, der sich axial entlang einer Zentrallängsachse erstreckt, eine konzentrisch zu dem Kern angeordnete Außenhülse, einen zwischen dem Kern und der Außenhülse angeordneten und mit ihnen durch Vulkanisation verbundenen elastomeren Lagerkörper, wobei in dem Lagerkörper zwei sich in axialer Richtung über die gesamte Länge des Lagerkörpers erstreckende und in einer ersten Radialrichtung gegenüberliegende Längsausnehmungen ausgebildet sind, zwei Zwischenbleche, die in den Lagerkörper einvulkanisiert sind und jeweils mindestens einen kreisförmigen Abschnitt umfassen, der sich um einen Teilkreismittelpunkt kreisförmig in einer Schnittebene senkrecht zu der Zentrallängsachse über mindestens 135° in Umfangsrichtung erstreckt, wobei der Lagerkörper für jedes Zwischenblech jeweils eine äußere Elastomerspur und eine innere Elastomerspur umfasst, wobei die Zwischenbleche jeweils zwei in Relation zu den kreisförmigen Abschnitten angewinkelte Abschnitte aufweisen, ist erfindungsgemäß vorgesehen, dass die angewinkelten Abschnitte der Zwischenbleche in Richtung einer zu der ersten Radialrichtung senkrechten zweiten Radialrichtung angewinkelt sind und sich senkrecht oder nahezu senkrecht in die Längsausnehmungen des Lagerkörpers hineinerstrecken.

Bevorzugterweise können die sich in axialer Richtung durch den Lagerkörper vollständig erstreckenden Längsausnehmungen identisch ausgebildet sein. Vorzugsweise können sich die Längsausnehmungen dabei in erster Radialrichtung von dem metallischen Kern aus in Richtung der Außenhülse erstrecken. Weiter vorzugsweise können die Längsausnehmungen identische Querschnittsformen bzw. Ausnehmungsformen aufweisen und/oder sich in identischer Weise in erster Radialrichtung vom Kern in Richtung Außenhülse erstrecken, wobei die Längsausnehmungen eine im Wesentlichen quadratische oder rechteckige Querschnittsform aufweisen können. Bevorzugterweise können sich die Längsausnehmungen parallel zu flachen Seitenflächen des Kernes in Axialrichtung erstrecken. Die sich in Umfangsrichtung um die Längsausnehmungen erstreckenden Zwischenbleche können dann mit ihren angewinkelten Abschnitten in Richtung einer zu der ersten Radialrichtung senkrechten zweiten Radialrichtung angewinkelt sein und sich senkrecht oder nahezu senkrecht in die Längsausnehmungen des Lagerkörpers hineinerstrecken.

Durch die erfindungsgemäße Lösung wird vorteilhafterweise ein Buchsenlager geschaffen, dessen endseitig umgeformte Zwischenbleche, im eingepressten Zustand eine in Umfangsrichtung nahezu geschlossene Geometrie ergeben. Die Lösung schafft eine Buchsengeometrie, welche ähnliche Steifigkeiten in die radialen Richtung wie im Stand der Technik erlaubt, sich jedoch durch geringere Dehnungsüberhöhungen bzw. Konzentrationen im Bereich des Spaltes aufgrund der senkrechten oder nahezu senkrecht angeordneten angewinkelten Abschnitte auszeichnet. Diese Dehnungsüberhöhungen entstehen im Stand der Technik insbesondere durch Verdrängung des Elastomers bei einer Radialbelastung senkrecht zum Spalt. "Nahezu umfänglich" ist vorliegend so zu verstehen, dass die Zwischenbleche im nicht eingepressten Zustand zwar einen Abstand zueinander haben können, sich mittels Kalibrierung der Außenhülse und/oder den Einpressvorgang hingegen stark annähern können. Dabei kann aber vorzugsweise selbst im kalibrierten und/oder eingepressten Zustand immer noch eine geringe Beabstandung zwischen den angewinkelten Abschnitten bzw. zwischen beider Zwischenbleche zueinander vorliegen.

Aufgrund der erfindungsgemäßen angewinkelten Abschnitte der Zwischenbleche, die in Richtung einer zur ersten Radialrichtung senkrechten zweiten Radialrichtung angewinkelt sind und sich senkrecht oder nahezu senkrecht in die Längsausnehmungen des Lagerkörpers erstrecken, wird vorteilhafterweise die Spannungsverteilung im Elastomer signifikant verbessert, da die senkrechte oder nahezu senkrechte Ausrichtung der Abschnitte den Elastomerkörper bei radialen Belastungen in beiden orthogonalen Richtungen gleichmäßiger kontrolliert. Dies reduziert gezielt Dehnungsüberhöhungen, insbesondere im Bereich der inneren Elastomerspur bzw. im Zentralbereich des Spalts, wo im Stand der Technik häufig kritische Spannungskonzentrationen auftreten, wie etwa bei den eingangs beschriebenen teilkreisförmigen Zwischenblechen. Gleichzeitig trägt die erfindungsgemäße Anordnung der Zwischenbleche und angewinkelten Abschnitte zu einer erhöhten Rotationssymmetrie bei, was eine gleichmäßigere Steifigkeit in alle radialen Richtungen gewährleistet. Dies ist insbesondere bei Anwendungen mit zyklischen oder dynamischen Belastungen von Vorteil, da ungleichmäßige Verformungen und Materialermüdung minimiert werden. Zusätzlich ermöglicht die senkrechte oder nahezu senkrechte Einbettung in die Längsausnehmungen eine stabilere Verankerung der Zwischenbleche, wodurch deren Positionierung während der Belastung präzise bleibt. Insgesamt führt diese Geometrie zu einer verbesserten Lebensdauer, einer gesteigerten mechanischen Stabilität und einer optimalen Kraftübertragung im elastomeren Buchsenlager.

Gemäß einer bevorzugten Ausführungsform können sich die angewinkelten Abschnitte derart nahezu senkrecht in die Längsausnehmungen des Lagerkörpers hinein erstrecken, dass sie in Bezug auf einen Kreisumfang der kreisförmigen Abschnitte abweichend von der Kreisform geringfügig in erster Radialrichtung nach innen in Richtung des Kerns umgeformt sein können. Die angewinkelten Abschnitte der Zwischenbleche erstrecken sich nahezu senkrecht in die Längsausnehmungen und ermöglichen eine kontrollierte Lastübertragung. Ihre Orientierung in der zweiten Radialrichtung nach innen sorgt für eine gleichmäßige Spannungsverteilung im Elastomer, wodurch Dehnungsüberhöhungen reduziert und die Lebensdauer erhöht werden. Da die Dehnungsüberhöhungen bei gleicher Elastomerspurdicke der inneren und äußeren Elastomerspur tendenziell an der inneren Elastomerspur im Zentralbereich auftreten, ist es vorteilhaft, wenn die innere Elastomerspur dicker als die äußere Elastomerspur ausgeführt wird. Demgemäß kann die innere Elastomerspur bevorzugterweise dicker ausgebildet sein als die äußere Elastomerspur. Zudem wirken sich die radial nach innen in Richtung Kern angewinkelten Abschnitte hinsichtlich der Steifigkeiten und der Verdrängung des Elastomers besonders positiv aus, wodurch die Dehnungskonzentration weiter vermindert wird.

Nach einer weiteren bevorzugten Ausgestaltungsvariante der Erfindung können die angewinkelten Abschnitte jeweils an einem Punkt des Kreisumfangs eine Winkelung erfahren. Die angewinkelten Abschnitte können sich derart erstrecken, dass sie jeweils in Bezug auf eine Tangente des Kreisumfangs der kreisförmigen Abschnitte im Punkt einen Winkel von maximal 20°, vorzugsweise einen Winkel von maximal 15°, einschließen können. Somit schließen beide angewinkelten Abschnittspaare der Zwischenbleche, die über ihre umfangsseitigen Stirnflächen in den Längsausnehmungen einander zugewandt sind, insgesamt 40° (bevorzugt insgesamt 30°) ein. Die radial nach innen umgeformten Abschnitte mit begrenztem Winkel können sich besonders vorteilhaft auswirken. Durch die leichte Innenwinkelung der Abschnitte entsteht eine optimierte Geometrie, die Spannungen harmonisch verteilt. Die Begrenzung des Winkels auf maximal 20° (bevorzugt maximal 15°) minimiert Materialermüdung und erhöht die Effizienz der Kraftübertragung, während die strukturelle Integrität des Systems erhalten bleibt. Wäre der Spalt nämlich wesentlich größer, würden zum einen die Steifigkeiten in die beiden senkrecht zueinander angeordneten Radialrichtungen stark voneinander abweichen, und zum anderen wären die Dehnungsüberhöhungen durch Verdrängung des Elastomers insbesondere im mittigen Zentralbereich der inneren Elastomerspur zu erwarten. Durch die definierten Maximalgrenzen wird dem vorteilhafterweise entgegengewirkt.

Nach einer weiteren bevorzugten Ausführungsform können sich die angewinkelten Abschnitte der Zwischenbleche derart in die Längsausnehmungen hinein erstrecken, dass ihre Erstreckungen an den Stirnseiten der Zwischenbleche insgesamt in Summe maximal 60°, bevorzugt maximal 40°, weiter bevorzugt maximal 32° eines Kreisumfangs um den Teilkreismittelpunkt ausmachen können. Ihre Erstreckungen in den Zentralbereichen der Zwischenbleche können vorzugsweise insgesamt in Summe maximal 90°, bevorzugt maximal 80°, eines Kreisumfangs um den Teilkreismittelpunkt betragen. Die Einschränkung der Gesamterstreckung auf maximal 60° (bevorzugt 40°) an den Stirnseiten und maximal 90° (bevorzugt 80°) in den Zentralbereichen gewährleistet eine präzise Balance zwischen Flexibilität und Steifigkeit bzw. Stabilität. Dies verbessert die Lastverteilung und reduziert lokale Überlastungen im Elastomer.

Bevorzugterweise können die Zwischenbleche an ihren Stirnseiten insgesamt in Summe einen Bereich mit rotatorischer Symmetrie um die Längsachse von mindestens 270° in Umfangsrichtung, vorzugsweise von mindestens 300° in Umfangsrichtung, aufweisen. Eine hohe Rotationssymmetrie von mindestens 270° (vorzugsweise 300°) führt zu einer gleichmäßigen Radialsteifigkeit in alle Richtungen. Dies reduziert Spannungsspitzen und sorgt für eine verbesserte Torsionsfestigkeit, was die Stabilität des Buchsenlagers bei dynamischen Belastungen erhöht. Damit entspricht der Bereich der Zwischenbleche mit rotatorischer Symmetrie mindestens 270° oder 3/4 des Kreisumfangs, in der bevorzugten Ausführung 300° oder 5/6 des Kreisumfangs. Diese hohe Rotationssymmetrie führt zu ähnlichen Radialsteifigkeiten wie im Stand der Technik, bietet jedoch gleichzeitig ebenfalls gute Torsionseigenschaften. Als gute Torsionseigenschaften sind dabei geringe Dehnungsüberhöhungen an den angewinkelten Abschnitten gemeint.

Gemäß einer weiteren bevorzugten Variante können sich die gegenüberliegenden Längsausnehmungen beim Kalibrieren der Außenhülse und/oder beim Montieren des Buchsenlagers derart schließen, dass sich die einander zugewandten Stirnflächen der angewinkelten Abschnitte der Zwischenbleche aufeinander zubewegen. Dabei kann eine Beabstandung zwischen den Stirnflächen angeordnet sein, die maximal doppelt so groß wie die Wandstärke der Zwischenbleche, vorzugsweise maximal 1,5-mal so groß wie die Wandstärke der Zwischenbleche, ausgebildet sein kann. Die Möglichkeit, die Längsausnehmungen beim Kalibrieren oder Montieren des Buchsenlagers zu schließen, sorgt für eine bessere Anpassung und reduziert Geräusche und Vibrationen. Die kontrollierte Beabstandung zwischen den Stirnflächen gewährleistet eine optimale Elastomer Verformung und vermeidet übermäßige Spannungskonzentrationen.

Nach einer weiteren bevorzugten Ausführungsform können sich die Längsausnehmungen in der ersten Radialrichtung vollständig durch die äußeren und inneren Elastomerspuren des Lagerkörpers erstrecken. Die Längsausnehmungen können sich von dem Kern bis zu der Außenhülse vollständig radial erstrecken, wobei fertigungsbedingt die Oberflächen der Außenhülse, des Kernes und der Zwischenbleche mit dünnen Gummihäuten überzogen sein können. Weiter vorzugsweise können die Gummihäute dabei eine Dicke von etwa 0,6 mm bis 1 mm aufweisen. Die vollständige radiale Erstreckung der Längsausnehmungen durch innere und äußere Elastomerspuren sorgt für eine verbesserte Trennung der Lastbereiche. Dies reduziert Spannungskonzentrationen im Elastomer und sorgt für eine gleichmäßige Kraftübertragung zwischen Kern, Außenhülse und Zwischenblechen.

Vorzugsweise kann die Außenhülse über ihre gesamte Mantelfläche geschlossen ausgebildet sein oder zu den Längsausnehmungen korrespondierende Längsschlitze aufweisen, die sich in Axialrichtung über die gesamte Länge der Außenhülse erstrecken können. Eine geschlossene Außenhülse bietet hohe strukturelle Integrität und verhindert das Eindringen von Schmutz oder Feuchtigkeit. Alternativ verbessern Längsschlitze die Montageflexibilität und ermöglichen eine anwendungsspezifische Anpassung.

Gemäß einer bevorzugten Ausführungsform kann der Kern im Wesentlichen zylindrisch ausgebildet sein und einen bauchigen oder sphärischen Zentralbereich aufweisen. Der bauchige oder sphärische Zentralbereich kann zur Optimierung und Führung der Elastomerverformung bei axialen und radialen Belastungen dienen.

Bevorzugt kann der Kern zwei radial gegenüberliegende flache Seitenflächen aufweisen, die den Längsausnehmungen zugewandt sind. Der bauchige oder sphärische Zentralbereich des Kerns kann im Bereich der Längsausnehmungen durch die Seitenflächen abgeflacht sein. Die flachen Seitenflächen und der abgeflachte Zentralbereich minimieren Dehnungsüberhöhungen im Bereich der Längsausnehmungen und sorgen für eine kontrollierte Verformung. Die Abflachung des bauchigen oder sphärischen Zentralbereichs verbessert zudem die Passform und Stabilität.

Nach einer weiteren bevorzugten Variante kann der Kern wenigstens zwei Entlastungsnuten aufweisen, die in Bezug auf die Zentrallängsachse axial versetzt zu den sphärischen Zentralbereichen des Kerns angeordnet sein können. Die Entlastungsnuten reduzieren lokale Spannungsspitzen insbesondere bei Radialbelastungen senkrecht zu den Längsausnehmungen und erhöhen die Flexibilität des Systems. Ihre axiale Anordnung beidseits der sphärischen Zentralbereiche führen zu einer Reduktion der Dehnungen im Elastomer, welche durch das Verdrängen des Elastomers nach außen in Axialrichtung bei Radialbelastung beobachtet werden. Sie verhindern dadurch übermäßige Belastungen im Elastomer.

Bevorzugterweise können die Entlastungsnuten in Umfangsrichtung partiell ausgeführt sein und 90° in Umfangsrichtung versetzt zu den flachen Seitenflächen des Kerns ausgerichtet sein. Die 90°-Versetzung der Entlastungsnuten in Umfangsrichtung sorgt für eine gezielte Spannungsentlastung und definierte Ausrichtung, die die strukturelle Integrität des Buchsenlagers verbessern und gleichzeitig die Materialbeanspruchung verringern.

Gemäß einer weiteren bevorzugten Ausführungsform können die inneren Elastomerspuren jeweils zwischen dem Kern und einem Zwischenblech angeordnet sein. Die äußeren Elastomerspuren können jeweils zwischen einem Zwischenblech und der Außenhülse angeordnet sein. Dabei kann eine Dicke der inneren Elastomerspuren maximal 30 Prozent, vorzugsweise maximal 20 Prozent, größer sein als eine Dicke der äußeren Elastomerspuren, wobei diese größere Dicke in mindestens 50 % der Erstreckung der Elastomerspuren, bevorzugt in mindestens 80 % der Erstreckung der Elastomerspuren aufzufinden ist. Die jeweiligen Dicken können entlang eines Radialvektors gemessen werden, der senkrecht zur Zentrallängsachse angeordnet ist und durch die größte radiale Erstreckung des bauchigen oder sphärischen Zentralbereichs verläuft. Die Anpassung der Dickenverhältnisse der Elastomerspuren optimiert die Verformungseigenschaften und Lastübertragung. Dies führt zu einer besseren Ausnutzung des Elastomers und einer erhöhten Belastbarkeit in spezifischen Anwendungen.

Nach einer bevorzugten Variante können die Stirnflächen der angewinkelten Abschnitte der Zwischenbleche sich auf die Zwischenbleche beziehen und einen geraden Verlauf in Axialrichtung entlang der Zentrallängsachse aufweisen. Die Stirnflächen, die sich auf eine Elastomerschicht des Lagerkörpers beziehen, können Entformungsschrägen in Axialrichtung entlang der Zentrallängsachse aufweisen. Die Kombination aus geraden Stirnflächen (der Zwischenbleche) in Axialrichtung und Entformungsschrägen (an der übergezogenen Elastomerschicht) ermöglicht eine einfache Montage und verhindert ungewollte Spannungsanreicherungen im Elastomer, insbesondere im zentralen Spaltbereich. Dies verbessert zudem die Montagefreundlichkeit und Funktionalität.

Vorzugsweise kann die Längserstreckung der Zwischenbleche in Axialrichtung geringer sein als die Längserstreckung der Entlastungsnuten in Axialrichtung. Hierdurch sind die Axialenden der Zwischenbleche beidseitig jeweils im Bereich einer Entlastungsnut positioniert, so dass die Axialenden der Zwischenbleche bei Kardanikbewegungen des Lagers weiter vom Kern beabstandet sind, als es ohne Entlastungsnuten der Fall wäre. Eine geringere Längserstreckung der Zwischenbleche reduziert somit Dehnungsspitzen im Elastomer und erhöht vorteilhafterweise die Flexibilität des Buchsenlagers. Dies optimiert die Anpassungsfähigkeit des Systems an dynamische Radial- und Kardanikbelastungen und verlängert seine Lebensdauer.

Gemäß einer weiteren bevorzugten Ausführungsform der Erfindung können Zentralbereiche der Zwischenbleche bauchig oder sphärisch ausgebildet sein, wobei die Position der bauchigen oder sphärischen Zentralbereiche der Zwischenbleche in Axialrichtung betrachtet korrespondierend zu dem sphärischen Zentralbereich des Kerns ausgebildet sein können. Die bauchige oder sphärische Ausbildung der Zentralbereiche der Zwischenbleche, die korrespondierend zur Geometrie des sphärischen Zentralbereichs des Kerns gestaltet ist, bietet mehrere technische Vorteile. Diese Formgebung optimiert die Anpassung der Zwischenbleche an die Verformung des elastomeren Lagerkörpers unter Belastung, insbesondere unter kardanischer Belastung.

Durch die korrespondierende Gestaltung wird eine gleichmäßige Dehnungsverteilung in den Elastomerspuren zwischen Kern, Zwischenblechen und Außenhülse erreicht, was Dehnungsspitzen im Material effektiv reduziert. Zudem ermöglicht die sphärische oder bauchige Form positiverweise eine insgesamt geringere Kardaniksteifigkeit als sie mit zylindrischen Zwischenblechen erreicht wird. Dies führt zu einem höheren Fahrkomfort und einer Reduktion von Materialermüdung und verbessert so die Gesamtlebensdauer und gleichzeitig NVH-Performance des Buchsenlagers.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine schematische Draufsicht auf eine erste Ausführungsform eines erfindungsgemäßen Buchsenlagers mit zwei sich in einer Schnittebene senkrecht zur Zentrallängsachse über mindestens 135° in Umfangsrichtung erstreckenden Zwischenblechen;
- Fig. 1b: eine schematische Vergrößerungsansicht des Buchsenlagers aus Fig. 1a;
- Fig. 2a: eine schematische Darstellung eines Kerns des erfindungsgemäßen Buchsenlagers in einer perspektivischen Längsansicht;
- Fig. 2b: eine schematische Darstellung des Kerns aus Fig. 2a mit zwei Zwischenblechen in einer perspektivischen Längsansicht;
- Fig. 2c: eine schematische Darstellung des Kerns aus Fig. 2a mit zwei Zwischenblechen in einer perspektivischen Längsschnittansicht;
- Fig. 2d: eine schematische Darstellung des Kerns aus Fig. 2a mit zwei Zwischenblechen in einer perspektivischen Querschnittsansicht;
- Fig. 2e: eine schematische Darstellung des Kerns aus Fig. 2a mit zwei Zwischenblechen in einer Längsschnittansicht;
- Fig. 3: eine schematische Draufsicht auf eine weitere Ausführungsform eines erfindungsgemäßen Buchsenlagers mit zwei sich in einer Schnittebene senkrecht zur Zentrallängsachse über mindestens 135° in Umfangsrichtung erstreckenden Zwischenblechen.

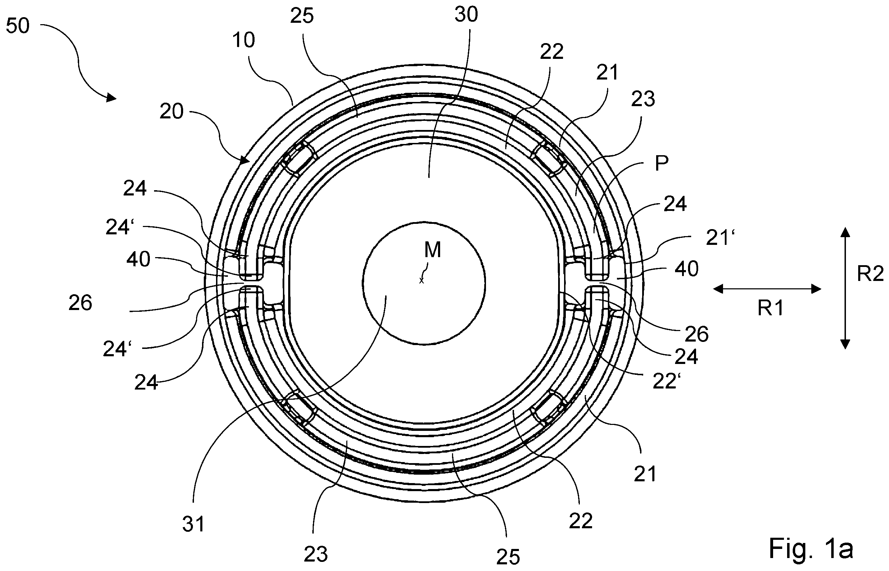

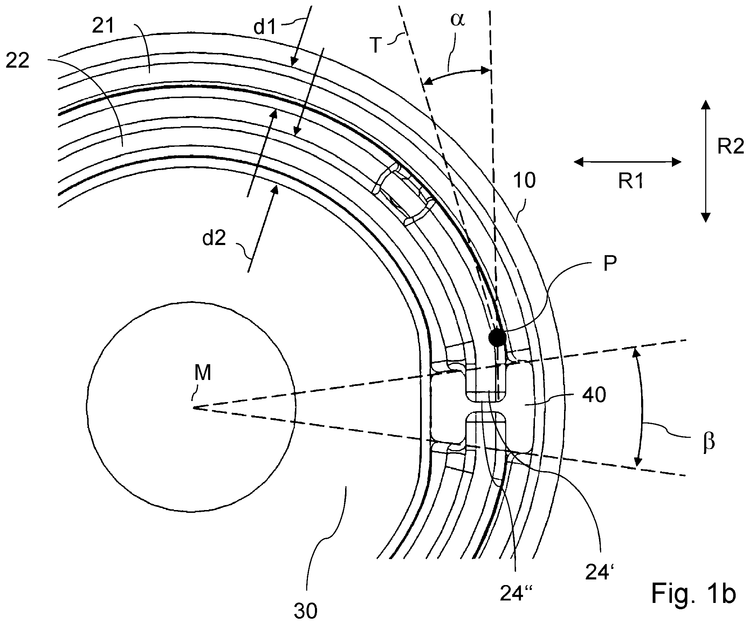

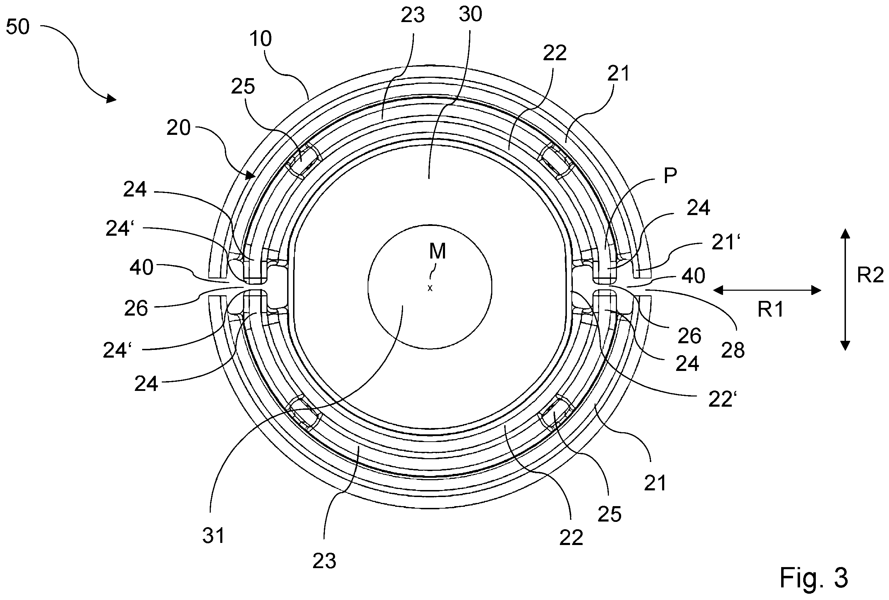

Das allgemein in Fig. 1 und Fig. 3 mit 50 bezeichnete elastomere Buchsenlager ist ein Lager, das einen metallischen Kern 30 umfasst, der sich axial entlang einer Zentrallängsachse L erstreckt.

Eine Außenhülse 10 ist konzentrisch zu dem Kern 30 angeordnet, und ein elastomerer Lagerkörper 20 ist zwischen dem Kern 30 und der Außenhülse 10 angeordnet. Der Lagerkörper 20 ist mit dem Kern 30 und der Außenhülse 10 durch Vulkanisation verbunden.

In dem Lagerkörper 20 sind zwei Längsausnehmungen 40 ausgebildet, die sich in axialer Richtung A über die gesamte Länge des Lagerkörpers 20 erstrecken und in einer ersten Radialrichtung R1 gegenüberliegen.

Zwei Zwischenbleche 25 sind in den Lagerkörper 20 einvulkanisiert. Jedes Zwischenblech 25 umfasst mindestens einen kreisförmigen Abschnitt 23, der sich um einen Teilkreismittelpunkt M in einer Schnittebene senkrecht zur Zentrallängsachse L über mindestens 135° in Umfangsrichtung U erstreckt.

Der Lagerkörper 20 umfasst für jedes Zwischenblech 25 jeweils eine äußere Elastomerspur 21 und eine innere Elastomerspur 22. Die Zwischenbleche 25 weisen jeweils zwei angewinkelte Abschnitte 24 auf, die in Richtung einer zur ersten Radialrichtung R1 senkrechten zweiten Radialrichtung R2 angewinkelt sind und sich senkrecht oder nahezu senkrecht in die Längsausnehmungen 40 des Lagerkörpers 20 hinein erstrecken.

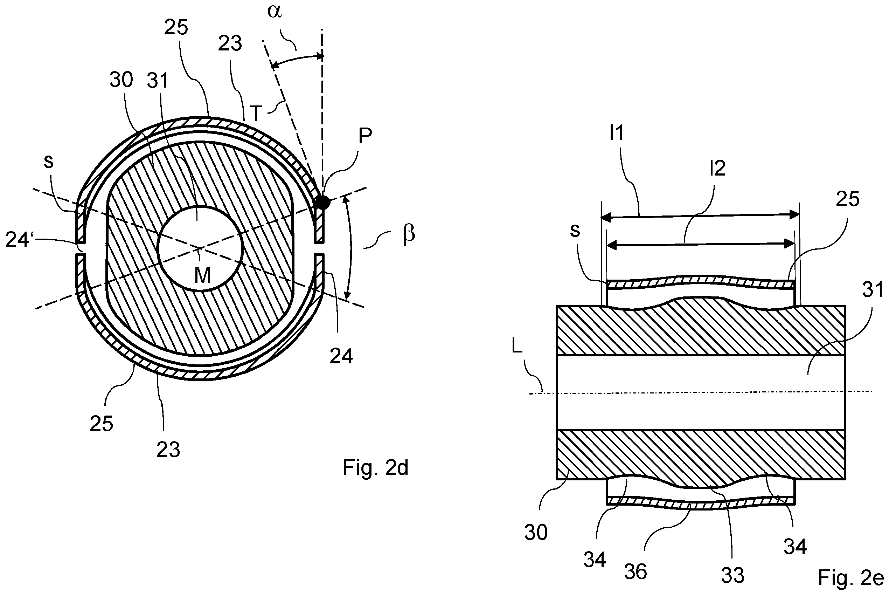

Wie man insbesondere durch Hinzunahme von Fig. 1b und Fig. 2d erkennt, können die angewinkelten Abschnitte 24 sich nahezu senkrecht in die Längsausnehmungen 40 hinein erstrecken, derart, dass sie in Bezug auf einen Kreisumfang der kreisförmigen Abschnitte 23 abweichend von der Kreisform geringfügig in erster Radialrichtung R1 nach innen in Richtung des Kerns 30 umgeformt sein können.

Wie man weiter in Fig. 1b erkennt, können die angewinkelten Abschnitte 24 jeweils an einem Punkt P des Kreisumfangs eine Winkelung erfahren und sich derart erstrecken, dass sie in Bezug auf eine Tangente T des Kreisumfangs der kreisförmigen Abschnitte 23 im Punkt P einen Winkel α von maximal 20°, vorzugsweise maximal 15°, einschließen.

Die angewinkelten Abschnitte 24 können sich derart in die Längsausnehmungen 40 hinein erstrecken, dass ihre Erstreckungen an den Stirnseiten 35 der Zwischenbleche 25 insgesamt maximal 60°, bevorzugt maximal 40°, weiter bevorzugt maximal 32°, eines Kreisumfangs um den Teilkreismittelpunkt M ausmachen.

Mit insgesamt sind dabei beide angewinkelten Abschnittspaare 24 zusammen gemeint, die sich in die radial gegenüberliegenden Längsausnehmungen 40 hineinerstrecken. Mit anderen Worten machen die angewinkelten Abschnitte 24 pro Längsausnehmungsseite maximal 30°, bevorzugt maximal 20°, weiter bevorzugt maximal 16°, eines Kreisumfangs um den Teilkreismittelpunkt M aus. Die Erstreckungen in den Zentralbereichen 36 der Zwischenbleche 25 können in Summe maximal 90°, bevorzugt maximal 80°, eines Kreisumfangs um den Teilkreismittelpunkt M betragen.

Die Zwischenbleche 25 können an ihren Stirnseiten 35 insgesamt in Summe einen Bereich mit rotatorischer Symmetrie um die Längsachse L von mindestens 270° in Umfangsrichtung U, vorzugsweise von mindestens 300°, aufweisen.

Die in Radialrichtung R1 gegenüberliegenden Längsausnehmungen 40 können sich beim Kalibrieren der Außenhülse 10 und/oder beim Montieren des Buchsenlagers 50 derart schließen, dass sich die einander zugewandten Stirnflächen 24' und 24" der angewinkelten Abschnitte 24 der Zwischenbleche 25 aufeinander zubewegen. Eine Beabstandung zwischen den Stirnflächen 24' und 24" soll bevorzugt maximal doppelt so groß wie die Wandstärke s der Zwischenbleche 25, besonders vorzugsweise maximal 1,5-mal so groß wie die Wandstärke s der Zwischenbleche 25, ausgebildet sein.

Wie man insbesondere in Fig. 1b erkennt, beziehen sich die Stirnflächen 24' auf die Flächen der Zwischenbleche 25 und die Stirnflächen 24" auf die übergezogene Elastomerschicht.

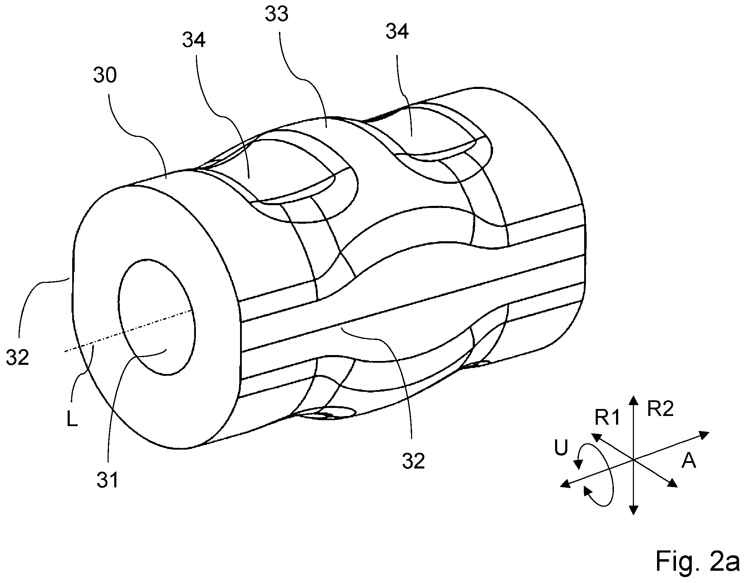

Der Kern 30 kann im Wesentlichen zylindrisch ausgebildet sein und einen bauchigen oder sphärischen Zentralbereich 33 umfassen (vgl. Fig. 2a).

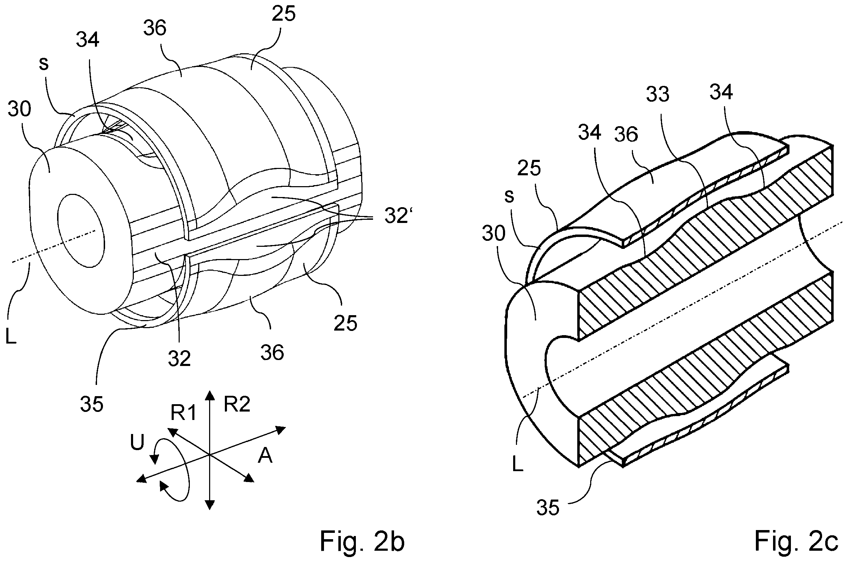

Fig. 2b und Fig. 2c verdeutlichen, dass die Zwischenbleche 25 Zentralbereiche 36 aufweisen können, die ebenfalls bauchig oder sphärisch ausgebildet sein können. Die Position der bauchigen oder sphärischen Zentralbereiche 36 der Zwischenbleche 25 kann in Axialrichtung A betrachtet korrespondierend zu dem sphärischen Zentralbereich des Kerns ausgebildet sein.

Die Längsausnehmungen 40 können sich in erster Radialrichtung R1 vollständig durch die äußeren Elastomerspuren 21 und die inneren Elastomerspuren 22 des Lagerkörpers 20 erstrecken und von dem Kern 30 bis zu der Außenhülse 10 vollständig radial verlaufen.

Die Außenhülse 10 kann über ihre gesamte Mantelfläche geschlossen ausgebildet sein oder Längsschlitze 28 aufweisen, die sich in Axialrichtung A über die gesamte Länge der Außenhülse 10 erstrecken (vgl. Fig. 3).

Der Kern 30 kann zwei radial gegenüberliegende flache Seitenflächen 32 aufweisen, die den Längsausnehmungen 40 zugewandt sind und mit den angewinkelten Abschnitten 24 bezüglich der einander zugewandten Flächen korrespondieren. Der bauchige oder sphärische Zentralbereich 33 des Kerns 30 kann im Bereich der Längsausnehmungen 40 durch die Seitenflächen 32 abgeflacht sein (vgl. insbesondere Fig. 2a).

Der Kern 30 kann wenigstens zwei Entlastungsnuten 34 aufweisen, die in Bezug auf die Zentrallängsachse L axial versetzt zu den sphärischen Zentralbereichen 33 des Kerns 30 angeordnet sind (vgl. insbesondere Fig. 2e).

Die Entlastungsnuten 34 können in Umfangsrichtung U partiell ausgeführt sein und 90° in Umfangsrichtung U versetzt zu den flachen Seitenflächen 32 des Kerns 30 ausgerichtet sein.

Die inneren Elastomerspuren 22 können zwischen dem Kern 30 und einem Zwischenblech 25 angeordnet sein, während die äußeren Elastomerspuren 21 zwischen einem Zwischenblech 25 und der Außenhülse 10 angeordnet sein können. Die Dicke d2 der inneren Elastomerspuren 22 kann maximal 30 %, vorzugsweise maximal 20 %, größer sein als die Dicke d1 der äußeren Elastomerspuren 21 (vgl. Fig. 1b).

Die Stirnflächen 24' der angewinkelten Abschnitte 24 der Zwischenbleche 25 können einen geraden Verlauf in Axialrichtung A entlang der Zentrallängsachse L aufweisen, während die Stirnflächen 24" sich auf eine Elastomerschicht des Lagerkörpers 20 beziehen und Entformungsschrägen in Axialrichtung A entlang der Zentrallängsachse L aufweisen können.

Die Längserstreckung l2 der Zwischenbleche 25 in Axialrichtung A kann geringer sein als die Längserstreckung l1 der Entlastungsnuten 34 in Axialrichtung A (vgl. insbesondere Fig. 2e).

Die Erfindung ist nicht auf die vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- R1: erste Radialrichtung (Buchsenlager)
- R2: zweite Radialrichtung (Buchsenlager, senkrecht zu R1)
- A: Axialrichtung (Buchsenlager)
- U: Umfangsrichtung (Buchsenlager)
- L: Zentrallängsachse (Längsachse Buchsenlager)
- M: Teilkreismittelpunkt (kreisförmige Abschnitte)
- T: Tangente
- P: Krümmungspunkt (angewinkelter Abschnitt)
- d1: Dicke (Radialerstreckung - äußere Elastomerspur)
- d2: Dicke (Radialerstreckung - innere Elastomerspur)
- s: Wandstärke (Zwischenblech)
- l1: Längserstreckung (Entlastungsnuten)
- l2: Längserstreckung (Zwischenbleche)
- α: Winkel (Krümmungspunkt-Tangente)
- β: Winkel (Erstreckung angewinkelte Abschnitte)

- 10: Außenhülse
- 20: Lagerkörper (Elastomerkörper)
- 21: äußere Elastomerspur (Lagerkörper)
- 21': äußere Lagerkörperrestschicht
- 22: innere Elastomerspur (Lagerkörper)
- 22': innere Lagerkörperrestschicht
- 23: kreisförmiger Abschnitt (Grundkörper Zwischenbleche, Teilkreis)
- 24: angewinkelter Abschnitt (Umfangsenden Zwischenbleche)
- 24': Stirnflächen (angewinkelte Abschnitte, umfangsseitig, ohne Elastomerschicht)
- 24": Stirnflächen (mit Elastomerschicht)
- 25: Zwischenblech
- 26: Spalt (Beabstandung Stirnflächen)
- 28: Längsschlitze (Außenhülse)
- 30: Kern
- 31: Zentralausnehmung (Kern)
- 32: flache Seitenflächen (Kern)
- 32': flache Seitenbereiche (Zwischenbleche)
- 33: bauchiger/sphärischer Zentralbereich (Kern)
- 34: Entlastungsnuten (Kern)
- 35: Stirnseite (Zwischenblech, längsseitig)
- 36: Zentralbereich (Zwischenblech)
- 40: Längsausnehmung (Lagerkörper)
- 50: Elastomeres Buchsenlager

## Patentansprüche

1. Elastomeres Buchsenlager (50), umfassend einen metallischen Kern (30), der sich axial entlang einer Zentrallängsachse (L) erstreckt, eine konzentrisch zu dem Kern (30) angeordnete Außenhülse (10), einen zwischen dem Kern (30) und der Außenhülse (10) angeordneten und mit ihnen durch Vulkanisation verbundenen elastomeren Lagerkörper (20), wobei in dem Lagerkörper (20) zwei sich in axialer Richtung (A) über die gesamte Länge des Lagerkörpers (20) erstreckende und in einer ersten Radialrichtung (R1) gegenüberliegende Längsausnehmungen (40) ausgebildet sind, zwei Zwischenbleche (25), die in den Lagerkörper (20) einvulkanisiert sind und jeweils mindestens einen kreisförmigen Abschnitt (23) umfassen, der sich um einen Teilkreismittelpunkt (M) kreisförmig in einer Schnittebene senkrecht zu der Zentrallängsachse (L) über mindestens 135° in Umfangsrichtung (U) erstreckt, wobei der Lagerkörper (20) für jedes Zwischenblech (25) jeweils eine äußere Elastomerspur (21) und eine innere Elastomerspur (22) umfasst, wobei die Zwischenbleche (25) jeweils zwei in Relation zu den kreisförmigen Abschnitten (23) angewinkelte Abschnitte (24) aufweisen, **dadurch gekennzeichnet, dass** die angewinkelten Abschnitte (24) der Zwischenbleche (25) in Richtung einer zu der ersten Radialrichtung (R1) senkrechten zweiten Radialrichtung (R2) angewinkelt sind und sich senkrecht oder nahezu senkrecht in die Längsausnehmungen (40) des Lagerkörpers (20) hineinerstrecken.

2. Elastomeres Buchsenlager nach Anspruch 1, **dadurch gekennzeichnet, dass** die angewinkelten Abschnitte (24) sich derart nahezu senkrecht in die Längsausnehmungen (40) des Lagerkörpers (20) hineinerstrecken, dass sie in Bezug auf einen Kreisumfang der kreisförmigen Abschnitte (23) abweichend von der Kreisform geringfügig in erster Radialrichtung (R1) nach innen in Richtung des Kerns (30) umgeformt sind.

3. Elastomeres Buchsenlager nach Anspruch 2, **dadurch gekennzeichnet, dass** die angewinkelten Abschnitte (24) jeweils an einem Punkt (P) des Kreisumfangs Winkelung erfahren, wobei die angewinkelten Abschnitte (24) der Zwischenbleche (25) sich derart erstrecken, dass sie jeweils in Bezug auf eine Tangente (T) des Kreisumfangs der kreisförmigen Abschnitte (23) im Punkt (P) einen Winkel (α) von maximal 20°, vorzugsweise einen Winkel (α) von maximal 15°, einschließen.

4. Elastomeres Buchsenlager nach Anspruch 3, **dadurch gekennzeichnet, dass** die angewinkelten Abschnitte (24) sich derart in die Längsausnehmungen (40) hineinerstrecken, dass ihre Erstreckungen an den Stirnseiten (35) der Zwischenbleche (25) insgesamt in Summe maximal 60°, bevorzugt maximal 40°, weiter bevorzugt maximal 32°, eines Kreisumfang um den Teilkreismittelpunkt (M) ausmachen, und/oder dass ihre Erstreckungen in den Zentralbereichen (36) der Zwischenbleche (25) insgesamt in Summe maximal 90°, bevorzugt maximal 80°, des Kreisumfangs um den Teilkreismittelpunkt (M) ausmachen.

5. Elastomeres Buchsenlager nach einem der vorangehenden Ansprüche, **dadurch gekennzeichnet, dass** die Zwischenbleche (25) an ihren Stirnseiten (35) insgesamt in Summe einen Bereich mit rotatorischer Symmetrie um die Längsachse (L) von mindestens 270° in Umfangsrichtung (U), vorzugsweise von mindestens 300° in Umfangsrichtung (U), aufweisen.

6. Elastomeres Buchsenlager nach einem der vorangehenden Ansprüche, **dadurch gekennzeichnet, dass** die gegenüberliegenden Längsausnehmungen (40) sich beim Kalibrieren der Außenhülse (10) und/oder beim Montieren des Buchsenlagers (50) derart schließen, dass sich einander zugewandten Stirnflächen (24', 24") der angewinkelten Abschnitte (24) der Zwischenbleche (25) aufeinander zubewegen, wobei eine Beabstandung zwischen den Stirnflächen (24', 24") der angewinkelten Abschnitte (24) nach dem Schließen der Längsausnehmungen (40) angeordnet ist, die maximal doppelt so groß wie eine Wandstärke (s) der Zwischenbleche (25), vorzugsweise maximal 1,5-mal so groß wie eine Wandstärke (s) der Zwischenbleche (25), ausgebildet ist.

7. Elastomeres Buchsenlager nach einem der vorangehenden Ansprüche, **dadurch gekennzeichnet, dass** die Längsausnehmungen (40) sich in erster Radialrichtung (R1) vollständig durch die äußeren und inneren Elastomerspuren (21, 22) des Lagerkörpers (20) erstrecken, wobei die Längsausnehmungen (40) sich von dem Kern (30) bis zu der Außenhülse (10) vollständig radial erstrecken.

8. Elastomeres Buchsenlager nach einem der vorangehenden Ansprüche, **dadurch gekennzeichnet, dass** die Außenhülse (10) über ihre gesamte Mantelfläche geschlossen ausgebildet ist oder zu den Längsausnehmungen (40) korrespondierende Längsschlitze (28) aufweist, die sich in Axialrichtung (A) über die gesamte Länge der Außenhülse (10) erstrecken.

9. Elastomeres Buchsenlager nach einem der vorangehenden Ansprüche, **dadurch gekennzeichnet, dass** der Kern (30) im Wesentlichen zylindrisch ausgebildet ist, wobei der Kern (30) einen bauchigen oder sphärischen Zentralbereich (33) aufweist.

10. Elastomeres Buchsenlager nach Anspruch 9, **dadurch gekennzeichnet, dass** der Kern (30) zwei radial gegenüberliegende flache Seitenflächen (32) aufweist, die den Längsausnehmungen (40) zugewandt sind, wobei der bauchige oder sphärische Zentralbereich (33) des Kerns (30) im Bereich der Längsausnehmungen (40) durch die Seitenflächen (32) abgeflacht ist.

11. Elastomeres Buchsenlager nach Anspruch 9 oder 10, **dadurch gekennzeichnet, dass** der Kern (30) wenigstens zwei Entlastungsnuten (34) aufweist, wobei die Entlastungsnuten (34) in Bezug zu der Zentrallängsachse (L) axial versetzt zu den sphärischen Zentralbereichen (33) des Kerns (30) angeordnet sind.

12. Elastomeres Buchsenlager nach Anspruch 11, **dadurch gekennzeichnet, dass** die Entlastungsnuten (34) in Umfangsrichtung (U) partiell ausgeführt sind, wobei die Entlastungsnuten (34) 90° in Umfangsrichtung (U) versetzt zu den flachen Seitenflächen (32) ausgerichtet sind.

13. Elastomeres Buchsenlager nach einem der Ansprüche 9 bis 12, **dadurch gekennzeichnet, dass** die inneren Elastomerspuren (22) jeweils zwischen dem Kern (30) und einem Zwischenblech (25) und die äußeren Elastomerspuren (21) jeweils zwischen einem Zwischenblech (25) und der Außenhülse (10) angeordnet sind, wobei eine Dicke (d2) der inneren Elastomerspuren (22) maximal 30 %, vorzugsweise maximal 20 %, größer ist als eine Dicke (d1) der äußeren Elastomerspuren (21), und wobei die jeweiligen Dicken (d2, d1) entlang eines Radialvektors gemessen werden, welcher senkrecht zur Zentrallängsachse (L) angeordnet ist und durch die größte radiale Erstreckung des bauchigen oder sphärischen Zentralbereichs (33) verläuft.

14. Elastomeres Buchsenlager nach Anspruch 6, **dadurch gekennzeichnet, dass** die Stirnflächen (24') der angewinkelten Abschnitte (24) sich auf die Zwischenbleche (25) beziehen und einen geraden Verlauf in Axialrichtung (A) entlang der Zentrallängsachse (L) aufweisen, wobei die Stirnflächen (24") sich auf eine Elastomerschicht des elastomeren Lagerkörper (20) beziehen und Entformungsschrägen in Axialrichtung (A) entlang der Zentrallängsachse (L) aufweisen.

15. Elastomeres Buchsenlager nach einem der Ansprüche 11 bis 14, **dadurch gekennzeichnet, dass** eine Längserstreckung (l2) der Zwischenbleche (25) in Axialrichtung (A) geringer ist als eine Längserstreckung (l1) der Entlastungsnuten (34) in Axialrichtung (A).
